Europäisches Patentamt

European Patent Office

Office européen des brevets

(11) Veröffentlichungsnummer: **0 242 675 B1**

(12) **EUROPÄISCHE PATENTSCHRIFT**

(45) Veröffentlichungstag der Patentschrift: **17.06.92**

(21) Anmeldenummer: **87105002.7**

(22) Anmeldetag: **04.04.87**

(51) Int. Cl.⁵: **G05D 23/13**, F16K 11/00

(54) **Mischbatterie.**

(30) Priorität: **17.04.86 DE 3612988**

(43) Veröffentlichungstag der Anmeldung:
**28.10.87 Patentblatt 87/44**

(45) Bekanntmachung des Hinweises auf die
Patenterteilung:
**17.06.92 Patentblatt 92/25**

(84) Benannte Vertragsstaaten:
**DE ES FR GB NL SE**

(56) Entgegenhaltungen:
EP-A- 0 156 122       FR-A- 2 295 327
GB-A- 2 052 019       GB-A- 2 120 752
US-A- 2 369 242       US-A- 3 955 759

(73) Patentinhaber: **FRIEDRICH GROHE AKTIENGE-
SELLSCHAFT**
**Hauptstrasse 137**
**W-5870 Hemer(DE)**

(72) Erfinder: **Kahle, Dieter**
**Waldemeistrasse 33**
**W-5860 Iserlohn(DE)**
Erfinder: **Stolle, Eberhard**
**Elsternweg 5**
**W-5800 Hagen 5(DE)**

# Beschreibung

Die Erfindung betrifft eine Mischbatterie mit den im Oberbegriff des Anspruchs 1 angegebenen Merkmalen. Eine Mischbatterie dieser Gattung ist aus der DE-PS 29 28 330 bekannt. Hierbei ist in einer Durchgangsbohrung des Batteriegehäuses stromaufwärts ein von zueinander verdrehbaren Keramikventilscheiben gebildetes Mengenregulierventil vorgesehen, mit dem synchron der Kalt- und Warmwasserzulauf reguliert werden kann. Stromabwärts hinter dem Keramikscheibenventil in der Durchgangsbohrung kann wahlweise eine Einrichtung zur Mischung, z.B. ein thermostatgeregeltes Mischventil, angeordnet werden. Die Betätigungseinrichtung für das Keramikscheibenventil und der Mischeinrichtung ist jeweils am Austrittsbereich der Durchgangsbohrung angeordnet, wobei der Zufluß von Kalt- und Warmwasser, der Abfluß von Mischwasser etwa radial zur Durchgangsbohrung erfolgt.

Ferner ist eine Mischbatterie, z.B. durch die DE-OS 33 39 464, bekannt, bei der in einem Batteriegehäuse bzw. Kartusche eine feststehende Keramikventilsitzscheibe mit Durchtrittsöffnungen für Kalt-, Warm- und Mischwasser angeordnet ist und an der ein mit einem hebelförmigen Handgriff verschiebbare, einen Überströmkanal aufweisende Keramikventilscheibe angelagert ist, derart, daß durch ein Auf- und Abbewegen des Handhebels die Gesamtdurchflußmenge und ein Verschwenken um die Mittelachse das Mischungsverhältnis des zufließenden Kalt- und Warmwassers einstellbar ist. Bei dieser Mischbatterie bzw. Ventilkartusche sind die Zu- und Abflußöffnungen an der einen Stirnseite und die Betätigungseinrichtung an der anderen Stirnseite angeordnet, so daß die Ventilkartusche unverändert an den verschiedensten Aufputz- und Unterputzarmaturen eingesetzt werden kann und somit z.B. eine kostengünstige Fertigung ermöglicht ist. Das Mischungsverhältnis von Kalt- und Warmwasser bzw. die Mischwassertemperatur wird bei dieser Mischbatterie jedoch lediglich durch die verschiebbare Ventilscheibe gesteuert, so daß bei auftretenden Zustandsänderungen des zufließenden Kalt- und/oder Warmwassers entsprechend in der Temperatur geändertes Mischwasser in der Mischbatterie erzeugt wird, was unerwünscht ist.

Der Erfindung liegt die Aufgabe zugrunde, die gattungsgemäß im Oberbegriff des Anspruchs 1 angegebene Mischbatterie zu verbessern, so daß eine kompakte Bauweise und eine einseitige Bedienung ermöglicht ist, wobei es mit zur Aufgabe gehört, die Mischbatterie so zugestalten, daß sie auch in Armaturen eingesetzt werden kann, die für Mischbatterien mit einer Steuerung der Mischwassertemperatur vorgesehen sind.

Diese Aufgabe wird erfindungsgemäß durch die im kennzeichnenden Teil des Anspruchs 1 angegebenen Merkmale gelöst.

Weitere Ausgestaltungen der Erfindung sind in den Ansprüchen 2 bis 23 angegeben.

Die mit der Erfindung erzielbaren Vorteile bestehen insbesondere darin, daß es mit der kompakten Ausbildung des Sondergehäuses ermöglicht ist, die Abmessungen von Ventilscheiben für ausschließlich steuerbare Mischbatterien einzuhalten und nur an einem Teilbereich die Bedienungselemente zu plazieren.

Zweckmäßig kann das thermostatgeregelte Mischventil als eine Baueinheit in einer Hülse angeordnet werden, die von der Kopfseite aus in das Sondergehäuse einsetzbar ist. Hierbei kann die Aufnahmeöffnung in dem Sondergehäuse so angeordnet werden, daß die Mischventilbaueinheit nur in der Schließstellung der Ventilscheiben zum Sondergehäuse entnommen werden kann.

Vorteilhaft kann die Hülse für die Kapselung des thermostatgeregelten Mischventils stufenförmig verjüngt ausgebildet werden, so daß unter anderem an der äußeren Mantelfläche der Hülse Siebringe im Bereich der Einlaßschlitze für das Kalt- und Warmwasser angeordnet werden können. Durch die relativ leichte Entnahme der Mischventilbaueinheit aus dem Sondergehäuse können z.B. die Siebringe nach Verschmutzung leicht gereinigt werden.

Das erfindungsgemäße Sondergehäuse ermöglicht im Kopfbereich eine Zweigriff- oder Eingriffbedienung.

Bei der Version mit Eingriffbedienung ist vorteilhaft auf der Mischbatterie ein rohrförmiger Hebel angeordnet, auf dessen äußerem Ende eine um die Achse des Hebels drehbare Vorwähleinrichtung zur Bestimmung der Mischwassertemperatur vorgesehen ist. Die mit der Vorwähleinrichtung erzeugte Stellgröße für das thermostatgeregelte Mischventil kann durch verschiedene Übertragungsmittel dem Mischventil zugeführt werden. Durch ein Verschwenken des Hebels um eine Schwenkachse wird das Sondergehäuse mit der bewegbaren Keramikventilscheibe in der Mischbatterie radial verschoben, so daß hierdurch synchron die Querschnitte der beiden Zuflußöffnungen für das kalte und warme Wasser zwischen den beiden Ventilscheiben veränderbar ist und somit die Gesamtdurchflußmenge bestimmt werden kann.

Als Übertragungsmittel für die mit der Vorwähleinrichtung erzeugten Stellgröße auf das thermostatgeregelte Mischventil kann vorteilhaft ein in dem rohrförmigen Hebel angeordnetes Gestänge vorgesehen werden, wobei das Gestänge einerseits in einer mit der Vorwähleinrichtung bewegbaren Schraube und andererseits mit einem Kugelkopf in einer Einsenkung des Kopfstücks des thermostatgeregelten Mischventils aufgenommen ist. Durch das Kopfstück ist von der entgegengesetzten Seite der Stößel des Thermostatelements bzw. Dehnstoffelements hindurchgeführt und liegt am Kugelkopf an, so daß bei einer Axialverstellung der Schraube in der Vorwähleinrichtung eine entsprechende Stellgröße auf das Dehnstoffelement und dem Doppelsitzventilschieber übertragen wird. Zweckmäßig kann in dem Gestänge noch eine bekannte Überlastsicherung integriert werden, die eine Beschädigung des Thermostats bei einem Aufsitzen des Ventilschiebers verhindert. Zweckmäßig wird der Kugelkopf so positioniert, daß bei einer Sollwerttemperaturvorgabe von 38° C. der Kugelmittelpunkt sich auf der Schwenkachse des Hebels befindet. In dieser Stellung tritt somit bei einem Verschwenken des Hebels um die Schwenkachse keine Temperatursollwertveränderung ein. Bei anderen Temperatursollwerteinstellungen (z.B. 30 oder 50° C.) tritt zwar eine geringfügige Sollwertveränderung beim Schwenken des Hebels auf, die aber aufgrund der Maßverhältnisse bei dem Mischventil vernachlässigbar klein ist. Außerdem besteht die Möglichkeit, durch entsprechende Ausgestaltung der Auflagestellen des Gestänges, diese zu verhindern.

Neben der Temperatursollwertübertragung durch ein Gestänge, kann dieses auch vorteilhaft durch eine hydraulische Einrichtung erfolgen. Hierbei wird ein Kolben in der Hydraulikeinrichtung von der Vorwähleinrichtung bewegt, wobei die Hydraulikflüssigkeit mittels einer flexiblen Leitung oder Drehdurchführung einem zweiten Bereich mit einem entsprechenden Kolben zugeführt wird, an dem der Stößel des Dehnstoffelements anliegt. Außerdem kann die Überlastsicherung mit einer Schraubendruckfeder durch ein vorgespanntes Gasvolumen in der Hydraulikeinrichtung ersetzt werden.

Neben einem geschlossenen Hydrauliksystem mit einer hochviskosen Druckflüssigkeit ist auch ein System mit automatischer Nachfüllung für etwaige Leckverluste aus dem Kaltwasserbereich der Mischbatterie möglich. Dieses bietet weiterhin den Vorteil, daß mittels einer vorbestimmten Lage der Nachfüllbohrung eine automatische Vorjustierung erfolgt, so daß an der Vorwähleinrichtung keine bzw. nur eine Feinjustierung erforderlich ist. Ferner lassen sich bei einer hydraulischen Sollwertübertragung relativ einfach erwünschte Sollwertbeeinflussungen, z.B. Begrenzung der Größe der Sollwertübertragung pro Zeiteinheit zur Vermeidung von einem Über- und Unterschwingen des Dehnstoffelements, erreichen.

Ausführungsbeispiele der Erfindung sind in der Zeichnung dargestellt und werden im folgenden näher beschrieben. Es zeigt

Figur 1     eine thermostatgeregelte Mischbatterie im Längsschnitt;

Figur 2     die Mischbatterie gemäß Figur 1 in der Schnittebene II;

Figur 3     die Mischbatterie gemäß Figur 1 in der Schnittebene III;

Figur 4     die Mischbatterie gemäß Figur 3 in der Schnittebene IV;

Figur 5     die Mischbatterie gemäß Figur 1 in der Schnittebene V;

Figur 6     die Mischbatterie gemäß Figur 1 in der Schnittebene VI;

Figur 7     die Mischbatterie gemäß Figur 1 in der Schnittebene VII;

Figur 8     ein anderes Ausführungsbeispiel einer thermostatgeregelten Mischbatterie im Längsschnitt;

Figur 9     die Mischbatterie gemäß Figur 8 in der Schnittebene IX;

Figur 10     die Mischbatterie gemäß Figur 9 in der Schnittebene X;

Figur 11     einen Teil der Mischbatterie gemäß Figur 8 in Seitenansicht;

Figur 12     die Mischbatterie gemäß Figur 8 in der Schnittebene XII.

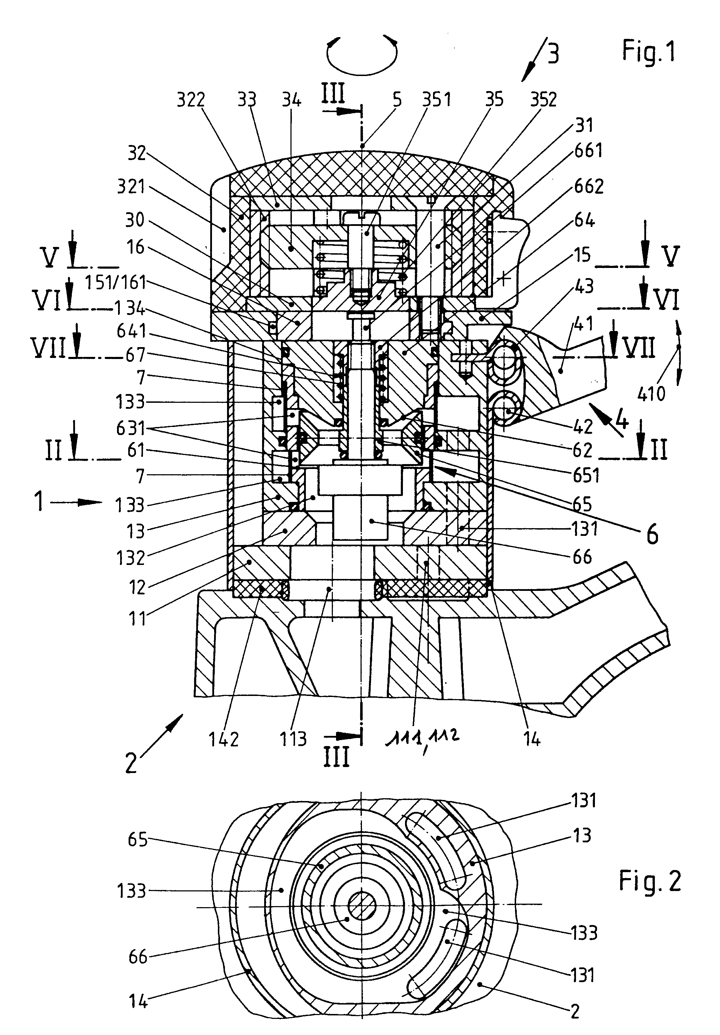

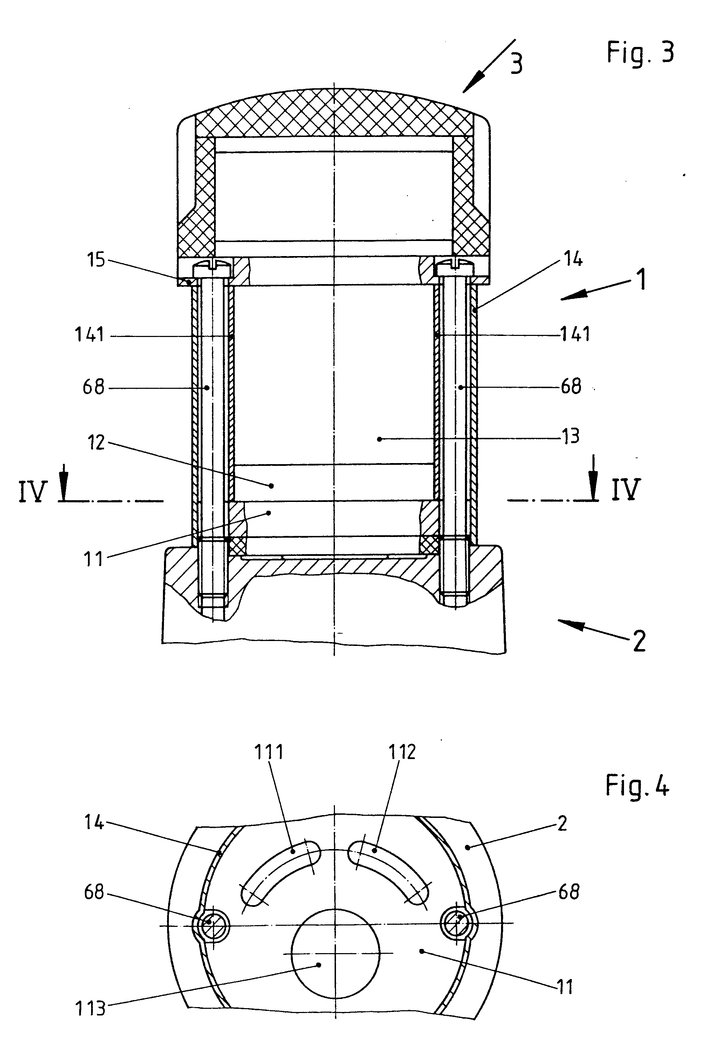

Der Einfachheit halber sind bei den Ausführungsbeispielen in der Zeichnung gleiche oder entsprechende Elemente mit jeweils gleichen Bezugszeichen versehen. Bei den in der Zeichnung dargestellten Ausführungsbeispielen ist eine Mischbatterie 1 mit einer Stirnseite auf einem zum Teil dargestellten Körper einer Armatur 2 angeordnet. Die Mischbatterie 1 ist dabei von einem etwa parallel zur Mittelachse 5 angeordneten, metallenen Mantel 14 umgeben, der an der vorstehenden Stirnseite zum Teil von einer Kopfscheibe 15 verschlossen ist, wobei an der Kopfscheibe zwei diametral gegenüberliegend angeordnete Befestigungsschrauben 68 angeordnet sind, womit die Mischbatterie an der Armatur 2 befestigbar ist. In dem Mantel 14 ist ein scheibenartiger Boden 142 angeordnet, in dem Dichtungen für den Anschluß der Mischbatterie 1 zu den in der Armatur 2 ausgebildeten Zulaufkanälen für Kalt- und Warmwasser und dem Auslaufkanal für das Mischwasser gehaltert sind. Unmittelbar an dem Boden 142 ist eine feststehende Ventilscheibe 11 aus Keramikmaterial angelagert, in der ringbogenförmige Durchtrittsöffnungen 111,112 für das Kalt- und Warmwasser und eine kreisförmige Durchtrittsöffnung 113 für Mischwasser ausgebildet sind, wie es insbesondere aus der Zeichnung Figur 4 zu entnehmen ist. An der feststehenden Ventilscheibe 11 ist eine bewegbare Ventilscheibe 12 angelagert, in der die Durchtrittsöffnungen 111,112,113 entsprechend angeordnet sind. An der der Ventilsitzscheibe abgekehrten Stirnseite ist ein Sondergehäuse 13 formschlüssig an der Ventilscheibe 12 angelagert, welches sich an der entgegengesetzten Stirnseite unterhalb der Kopfscheibe 15 abstützt. An der der Ventilscheibe 12 zugekehrten Stirnseite sind koaxial zu den Durchtrittsöffnungen 111 und 112 Zulaufkanäle 131 ausgebildet, wobei jeweils ein Zulaufkanal 131 in einen Ringkanal 133 mündet, wie insbesondere aus Figur 2 der Zeichnung zu entnehmen ist. In dem Sondergehäuse 13 ist eine von der Kopfseite zugängliche, stufenweise verengt ausgebildete Bohrung 134 vorgesehen, in der ein von einer entsprechend gestuft ausgebildeten Hülse 63 gekapseltes, thermostatgeregeltes Mischventil 6 angeordnet ist. Im Bereich der Ringkanäle 133 sind in der Hülse 63 Schlitze 631 ausgebildet, wobei den Schlitzen jeweils ein Siebring 7 an der Wandung der Hülse 63 vorgelagert ist. Koaxial in der kartuschenartig ausgebildeten Hülse 63 ist ein Doppelsitzventilschieber 65 gelagert, mit dem der Warmwassereinlaßspalt 61 und der Kaltwassereinlaßspalt 62 des Mischventils 6 bestimmt wird. Die Hülse 63 ist kopfseitig mit einem Kopfstück 64 verschlossen, wobei in dem Kopfstück 64 koaxial der Doppelsitzventilschieber 65 mit einem Hohlzapfen 651 in einer Bohrung verschiebbar gelagert ist. In dem Hohlzapfen 651 ist ein Thermostatelement bzw. ein Dehnstoffelement 66 gehaltert und mit einem Stößel 661 durch das Kopfstück 64 hindurchgeführt, wobei von der Außenseite eine Einsenkung 641 in dem Kopfstück 64 ausgebildet ist und der Hohlzapfen 651 auf einer Buchse zur Führung des vom Dehnstoff austreibbaren Stößels 661 mit einer in der Einsenkung 641 geführten Paßmutter 662 gehaltert ist. In der Einsenkung 641 ist außerdem eine Feder 67 angeordnet, die sich einerseits im Grund der Einsenkung 641 und andererseits an einer Schulter der Paßmutter 662 abstützt und den Stößel 661 des Dehnstoffelements in seine Anschlaglage strammt. Das separat durch die Durchtrittsöffnungen 111,112 über die beiden Zulaufkanäle 131 zugeführte Kalt- und Warmwasser gelangt von den Ringkanälen 133 an jeweils einen Siebring 7, wo Schmutzpartikel zurückgehalten werden. Das zugeführte Warmwasser gelangt hiernach durch den Warmwassereinlaßspalt 61 und das Kaltwasser durch den Kaltwassereinlaßspalt 62, der jeweils von der Stellung des Doppelsitzventilschiebers 65 bestimmt wird, in den Abfließkanal 132, der gleichzeitig als Mischkammer wirkt. In dem Abfließkanal 132 ist außerdem der temperaturempfindliche Bereich des Dehnstoffelements 66 angeordnet, von dem bei einer Abweichung der Mischwassertemperatur von der eingestellten Sollwerttemperatur eine Auslenkung des Stößels 661 und damit eine Lageveränderung des Doppelsitzventilschiebers 65 veranlaßt wird, wodurch entsprechend die Querschnitte des Warmwassereinlaßspalts 61 und des Kaltwassereinlaßspalts 62 verändert werden. Das in dem Ausfließkanal 132 bzw. der Mischkammer erzeugte Mischwasser gelangt dann über die Durchtrittsöffnungen 113 in den Ventilscheiben 11 und 12 zu dem Mischwasserkanal in der Armatur 2 und kann von hier verschiedenen Verbrauchern zugeführt werden.

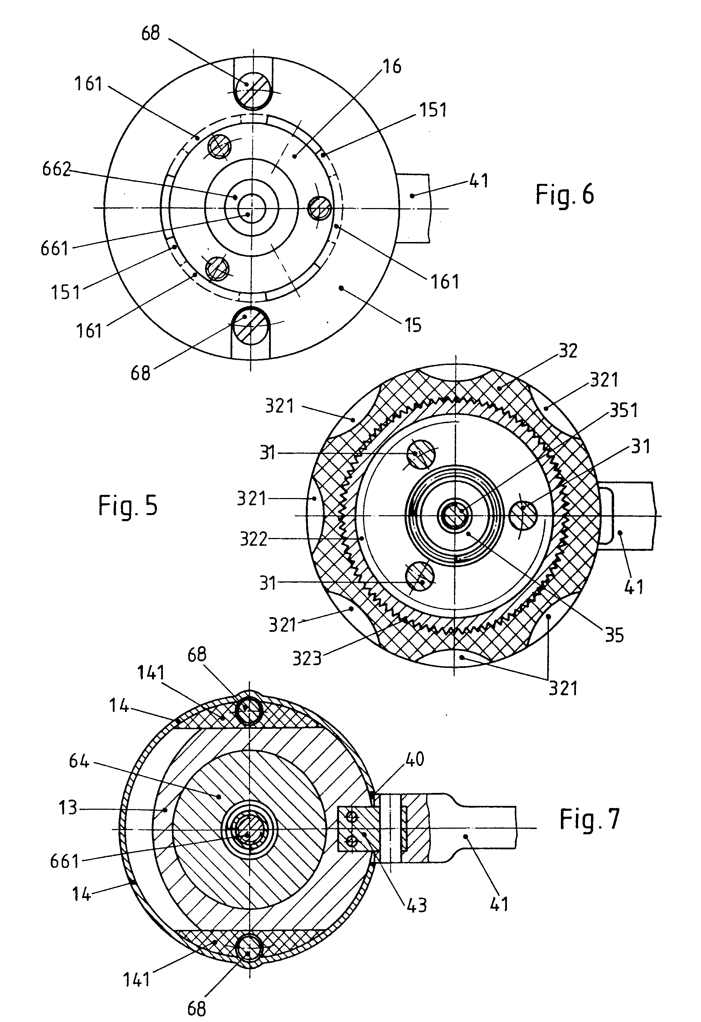

Die bewegbare Ventilscheibe 12 ist zusammen mit dem Sondergehäuse 13 in dem Mantel 14 in einer Parallelführung 141, wie es insbesondere in den Figuren 7 und 3 in der Zeichnung dargestellt ist, radial verschiebbar geführt. Zur Erzeugung der radialen Stellbewegung ist am Mantel 14 eine Stellhebeleinrichtung 4 ausgebildet. In Richtung der Parallelführung 141 ist am Mantel 14 ein Festlager 42 vorgesehen, an dem ein Stellhebel 41 verschwenkbar gehaltert ist. Oberhalb des Festlagers 42 ist ein Fenster 40 in dem Mantel 14 eingelassen, durch das ein am Sondergehäuse 13 befestigtes Augenlager 43 durchgeführt ist und an dem andererseits der Stellhebel 41 angelenkt ist. Durch ein Verschwenken des Stellhebels 41 in den Pfeilrichtungen 410 erfolgt somit eine Radialverschiebung des Sondergehäuses 13 mit der Ventilscheibe 12, so daß durch diese Stellbewegung die beiden Durchtrittsöffnungen 111,112 für die separate Zuleitung von Kalt- und Warmwasser in den beiden Ventilscheiben 12 und 13 synchron mehr oder weniger miteinander zur Deckung gebracht werden können, d.h. durch diese Stellbewegung kann der Zufluß von Kalt- und Warmwasser abgesperrt bzw. synchron in Abhängigkeit von der radialen Verschiebung freigegeben werden bzw. die Gesamtdurchflußmenge bestimmt werden.

In der Kopfscheibe 15 ist eine zentrale Bohrung zur Entnahme des thermostatgeregelten Mischventils 6 ausgebildet. In der Wandung dieser Bohrung ist eine Ringnut 151 eingelassen, wie insbesondere den Figuren 1 und 6 in der Zeichnung zu entnehmen ist. In der Ringnut 151 ist ein Innenring 16 mit einer Ringwulst 161 bajonettartig einsetzbar, wodurch das Mischventil 6 in seiner Stecklage im Sondergehäuse 13 gesichert ist. Auf der Kopfscheibe 15 ist eine Bodenscheibe 30 einer Vorwähleinrichtung 3 für die Mischwassertemperatur angelagert. Zur Sicherung des Innenrings 16 in seiner bajonettartigen Stecklage sind, wie insbesondere den Figuren 5 und 6 der Zeichnung zu entnehmen ist, drei symmetrisch angeordnete Ankerschrauben 31 vorgesehen, die den Innenring 16, die Kopfscheibe 15 und die Bodenscheibe 30 kraftschlüssig miteinander verbinden, wie es insbesondere der Figur 1 zu entnehmen ist. Auf der Bodenscheibe 30 ist koaxial zur Mittelachse 5 eine Hülse mit einem an der Innenwandung ausgebildeten Bewegungsgewinde 322 angelagert, die mit einer von den drei Ankerschrauben 31 drehfest aber axial verschiebbar geführten Schraube 34 mit dem Bewegungsgewinde in Verbindung steht. An der Kopfseite der Hülse für das Bewegungsgewinde 322 ist eine Haubenscheibe 33 parallel zur Bodenscheibe 30 angeordnet und ebenfalls von den Ankerschrauben 31 gehalten.

An der Außenwandung der Hülse für das Bewegungsgewinde 322 ist parallel zur Mittelachse 5 eine Riefenverzahnung 323 ausgebildet, auf die eine Griffhülse 32 zur Justierung der erforderlichen Drehstellung, bezogen auf die Temperatur des erzeugten Mischwassers und einer auf der Vorwähleinrichtung 3 angeordneten Temperaturskala, aufschiebbar ist. In der Stecklage wird die Griffhülse 32 mit einer Arretierschraube (in der Zeichnung nicht dargestellt) gesichert.

Koaxial zur Mittelachse 5 ist in der Bodenscheibe 30 und dem Innenring 16 eine Bohrung ausgebildet, in der eine Druckplatte 35 axial verschiebbar gelagert ist, wobei der Durchmesser der Druckplatte 35 so bemessen ist, daß der Stößel 661 des Dehnstoffelements 66 in allen möglichen Stellungen der Ventilscheibe 12 an ihr eine gleichbleibende Anlage erhält. Die Druckplatte 35 ist mit einem auf der Mittelachse 5 angeordneten Bolzen 351 mit der Schraube 34 verbunden. Der Bolzen 351 ist verschiebbar in der Schraube 34 geführt und so angeordnet, daß von ihr lediglich der maximale Abstand zwischen Druckplatte 35 und Schraube 34 bestimmt ist. Zwischen Schraube 34 und Druckplatte 35 ist außerdem eine Druckfeder 352 angeordnet, die so ausgelegt ist, daß sie erst dann zusammengedrückt wird, wenn der Doppelsitzventilschieber 65 auf einem Ventilsitz aufsitzt oder der Doppelsitzventilschieber 65 blockiert ist. Mit der federnden Anordnung der Druckplatte 35 werden somit Beschädigungen des Dehnstoffelements 66 in extremen Ventillagen verhindert.

Die Montage der Mischbatterie kann etwa in folgender Weise erfolgen:

Zunächst werden die Ventilscheiben 11 und 12 sowie das Sondergehäuse 13 zusammen mit im Boden 142 in den Mantel 14 mit der Parallelführung 141 eingesetzt. Nunmehr wird der Stellhebel 41 mit entsprechenden Stiften im Festlager 42 und dem Augenlager 43 angelenkt. Hiernach kann die Kopfscheibe mit den beiden Befestigungsschrauben 68 aufgesetzt werden und das Basisteil der Mischbatterie 1 an einer Armatur 2 gedichtet befestigt werden.

Nunmehr kann das gesondert zusammengefügte, als Baueinheit ausgebildete, thermostatgeregelte Mischventil 6 mit entsprechenden Dichtungen gedichtet in die gestufte Bohrung 134 eingeschoben werden.

Schließlich kann die ebenfalls als gesonderte Baueinheit montierte Vorwähleinrichtung 3 an der Mischbatterie befestigt werden. Hierbei wird die Vorwähleinrichtung 3 ohne Griffhülse 32 mit im Gewinde des Innenrings 16 lose eingeschraubten Ankerschrauben 31 bajonettartig mit dem Ringwulst 161 in die Ringnut 151 der Kopfscheibe 15 eingerastet. Danach werden die Ankerschrauben festgezogen, wodurch die Vorwähleinrichtung 3 kraftschlüssig mit der Mischbatterie 1 verbunden ist.

Nunmehr kann das thermostatgeregelte Mischventil durch Verdrehen der Hülse des Bewegungsgewindes 322 eingestellt werden und danach die Griffhülse 32 in der erforderlichen Drehstellung, bezogen auf die Temperaturskala, die die Temperatur des vom Mischventil 6 erzeugten Mischwassers anzeigen muß, aufgesteckt werden. Die Demontage kann in umgekehrter Reihenfolge erfolgen.

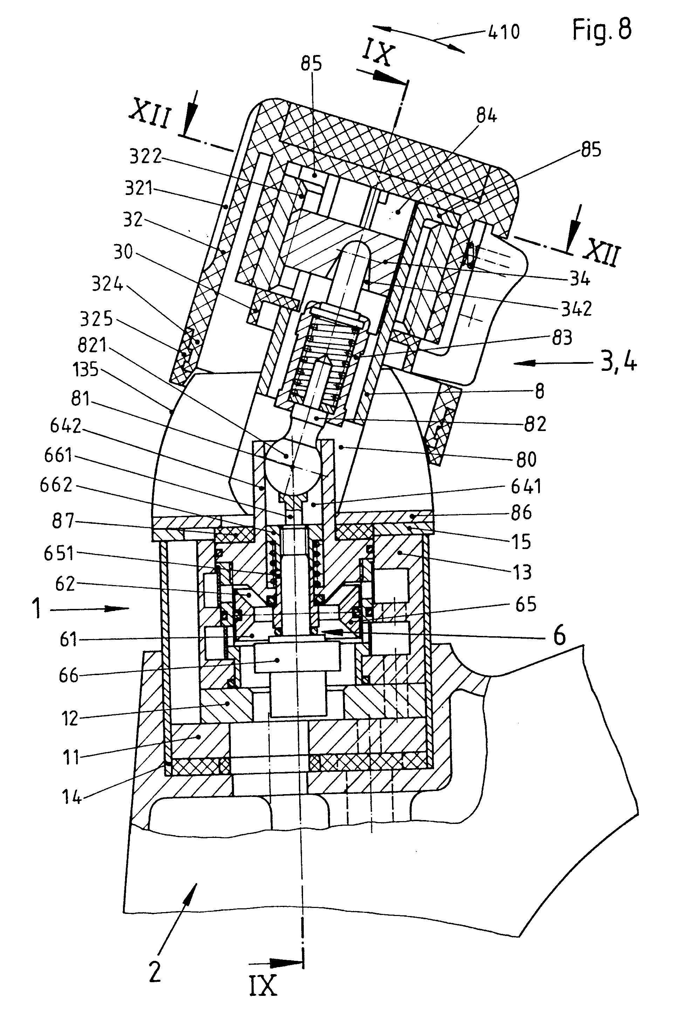

In den Figuren 8 bis 12 ist ein weiteres Ausführungsbeispiel der Erfindung dargestellt, das sich zu dem vorstehend beschriebenen Ausführungsbeispiel lediglich dadurch unterscheidet, daß die Stellhebeleinrichtung 4 und die Vorwähleinrichtung 3 zu einem Betätigungsglied zusammengefaßt ist. Die Mischbatterie 1 mit dem thermostatgeregelten Mischventil 6 entspricht im wesentlichen dem vorstehend beschriebenen Ausführungsbeispiel.

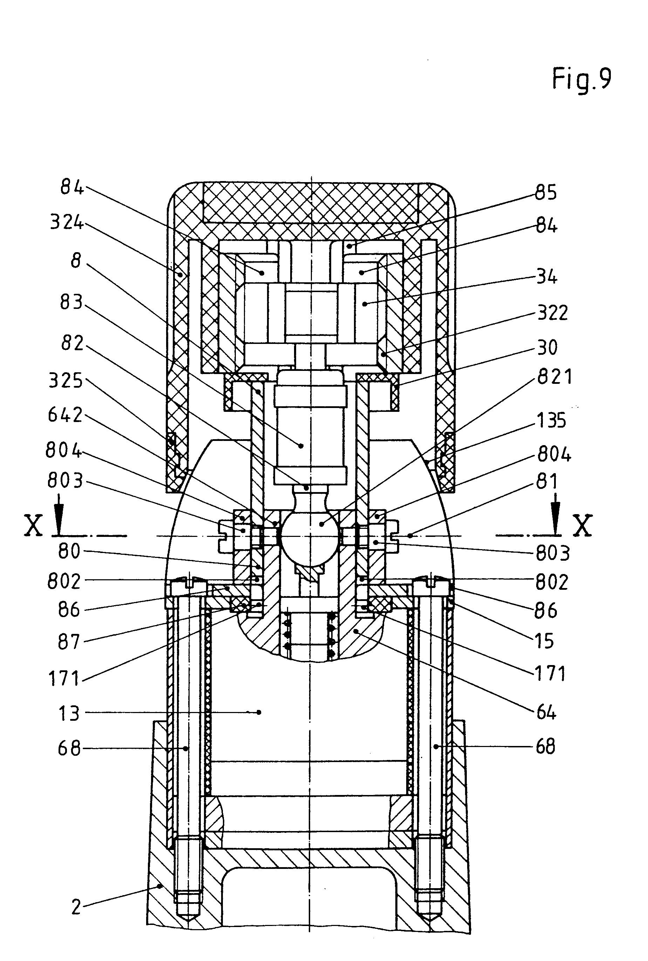

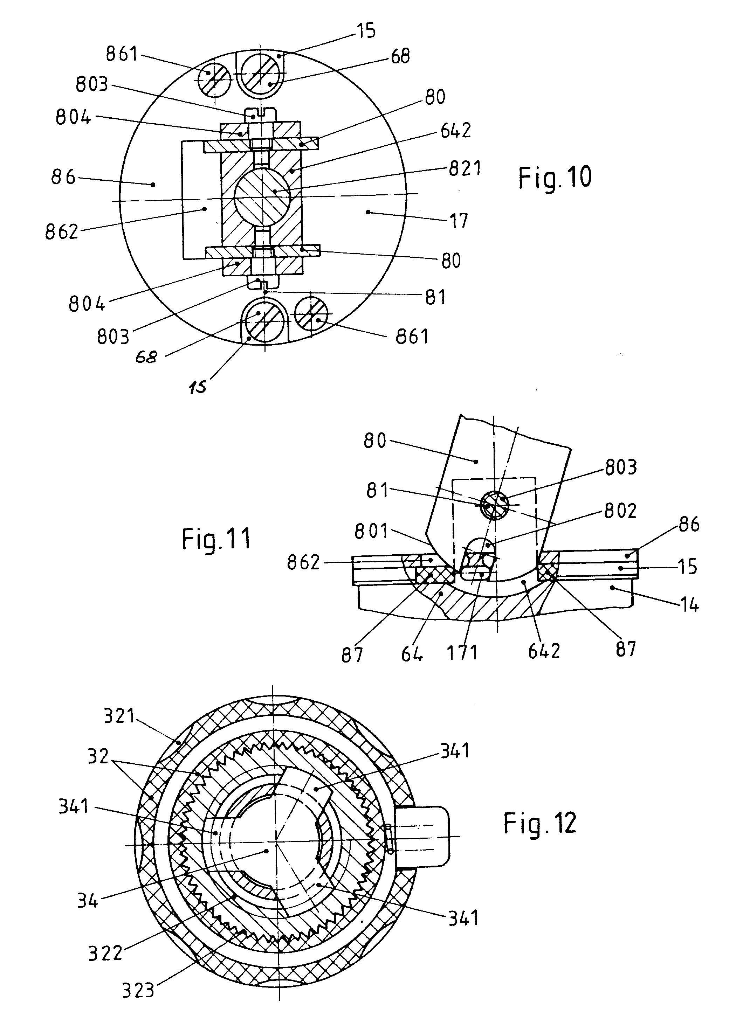

Das Mischventil 6 weist einen am Kopfstück ausgebildeten und vorkragenden Zapfen 642 auf, der durch die Kopfscheibe 15 hindurchgreift. An dem Zapfen 642 ist auf einer Schwenkachse 81 ein rohrförmiger Hebel 8 mit einer Gabel 80 angelenkt. Zur Halterung des Mischventils 6 in der Stecklage in der Mischbatterie 1 ist auf der Kopfscheibe 15 eine Montageplatte 86 mittels Schrauben 861 befestigbar angeordnet. An der Montageplatte 86 ist ebenfalls ein Durchbruch 862 ausgebildet, der eine radiale Verschiebung des Zapfens 642 zur Durchflußmengenregulierung ermöglicht. An der Seitenwandung des Durchbruchs 862 sind von um 90° gebogenen Ansätzen Knaggen 171 ausgebildet, wie insbesondere in Figuren 9 und 11 zu entnehmen ist, die in jeweils einen Schlitz 802 der Wangen 801 in der Gabel 80 einfassen. Wird nunmehr Hebel 8 in Richtung eines Pfeils 410 um die Schwenkachse 81 verschwenkt, so wird das Sondergehäuse 13 mit der Ventilscheibe 12 über den Zapfen 642 radial verschoben, so daß durch diese Stellbewegung die Gesamtdurchflußmenge eingestellt werden kann.

Die Gabel 80 ist auf der Schwenkachse 81 mit Stiftschrauben 803 schwenkbar am Zapfen 642 angelagert. Die Stiftschrauben 803 sind dabei mit Gewinde in der Gabel 80 gehaltert und ragen mit einem Lagerdorn in eine Bohrung des Zapfens 642, während an der Außenseite der Gabel jeweils ein Gleitschuh 804 verschwenkbar an der Stiftschraube 803 angeordnet ist, wie insbesondere den Figuren 9 und 10 zu entnehmen ist. Mit den beiden Gleitschuhen 804 wird sichergestellt, daß nach dem Lösen der Schrauben 861 das Mischventil 6 auch im ausgebauten Zustand außer der Radial-Verschiebung keine weitere Relativbewegungsmöglichkeit zur Montageplatte 86 hat. Damit ist eine erleichterte Handhabung beim Aus- und Einbau gegeben. Koaxial zur Mittelachse des rohrförmig ausgebildeten Hebels 8 ist ein Gestänge 82 zur Sollwertübertragung der Mischwassertemperatur auf das Mischventil 6 angeordnet. In dem Gestänge 82 ist eine bekannte Überlastsicherung 83 integriert. Das Gestänge 82 weist an der der Mischbatterie 1 zugekehrten Seite einen Kugelkopf 821 auf, der in der Einsenkung 641 des Kopfstücks 64 geführt ist und dessen Position so gewählt ist, daß bei einer Mischwasserabgabe von 38° C. der Mittelpunkt des Kugelkopfes 821 sich auf der Schwenkachse 81 des Hebels 8 befindet. An der gegenüberliegenden Stirnseite gelangt der Stößel 661 des Dehnstoffelements 66 an dem Kugelkopf 821 zur Anlage.

An der von der Mischbatterie 1 abgekehrten Seite weist der rohrförmige Hebel 8 Längsschlitze 84 auf, in denen die Schraube 34 mit radialen Fortsätzen 341 drehfest aber axial verschiebbar geführt ist, wie insbesondere der Zeichnung Figur 12 zu entnehmen ist. Im Grund der Längsschlitze 84 ist die Bodenscheibe 30 angeordnet, die ein Axiallager für die Hülse mit dem Bewegungsgewinde 322 bildet.

Koaxial zur Mittelachse ist in der Schraube 34 eine Mulde 342 ausgebildet, in der das Gestänge mit der dem Kugelkopf 821 entgegengesetzten Stirnseite gehaltert ist. Nach dem Zusammenfügen der Schraube 34, der Hülse für das Bewegungsgewinde 322 und der Bodenscheibe 30 auf dem rohrförmigen Ende des Hebels 8, wird der Endbereich mit einer Umbördelung 85 versehen, so daß die Hülse für das Bewegungsgewinde 322 axial festliegend aber drehbar auf dem Hebel 8 gelagert ist.

Oberhalb der Kopfscheibe 15 ist auf der Mischbatterie 1 eine sphärisch ausgebildete Haube 135 angeordnet, dessen Kugelmittelpunkt etwa auf der Schwenkachse 81 angeordnet ist. Als Gegenstück der Haube 135 ist auf der Riefenverzahnung 323 der Hülse mit dem Bewegungsgewinde 322 eine Griffhülse 32 aufschiebbar und in der Stecklage sicherbar vorgesehen. Die Griffhaube 32 weist zur guten Handhabbarkeit Griffflächen 321 auf und hat einen kreisförmigen bis in die Nähe der Haube 135 vorkragenden Rand 324. Auf dem Rand 324 ist eine Temperaturskala 325 befestigt. Zur Einstellung der Bedienungseinrichtung 3,4 kann die Griffhülse 32 in einer entsprechend der Temperatur des Mischwassers erforderlichen Drehstellung auf die Riefenverzahnung 323 der Hülse des Bewegungsgewindes 322 aufgeschoben und z.B. in der Stecklage mit einer Arretierschraube gesichert werden. Hiernach kann mit Hilfe der Temperaturskala 325 und einer, z.B. auf der Haube 135, feststehenden Marke durch Drehen der Griffhülse 32 die Mischwassertemperatur vorgewählt werden.

Die Montage bzw. Demontage der Mischbatterie 1 kann im wesentlichen in der Weise erfolgen, wie es zu dem Ausführungsbeispiel gemäß den Figuren 1 bis 7 beschrieben ist. Hierbei sind allerdings die Baueinheiten der Vorwähleinrichtung 3, Stellhebeleinrichtung 4 und Mischventil 6 zu einer Baueinheit zusammengefügt, die mit Hilfe der Montageplatte 86 und den beiden Schrauben 861 auf der Mischbatterie 1 gehaltert sind. Die drei Gruppen bilden bei diesem Ausführungsbeispiel eine Montageeinheit, die komplett in die Mischbatterie 1 eingebaut oder ausgebaut werden kann.

Damit das Kopfstück 64 einerseits eine exakte Anlage an der Montageplatte 86 hat und andererseits eine gleichmäßige Anlage des Sondergehäuses 13 an der Kopfscheibe 15 sichergestellt ist, ist an der Stirnseite des Kopfstücks 64 eine Gleitscheibe 87 befestigt, deren Dicke nicht kleiner ist als die der Kopfscheibe 15.

Bei dem vorstehend beschriebenen Ausführungsbeispiel ist die Betätigungseinrichtung mit einem knopfförmigen Handgriff versehen. Selbstverständlich kann die Betätigungseinrichtung auch mit einem radial vorstehenden Betätigungshebel versehen werden, wobei dann durch ein Auf- oder Abschwenken die Gesamtdurchflußmenge und durch ein Verschwenken um die Mittelachse die Mischwassertemperatur einstellbar ist.

**Patentansprüche**

1. Mischbatterie mit stromaufwärts angeordneten, aneinanderliegenden Ventilscheiben zur synchronen Dosierung und Absperrung der zufließenden Medien, wobei wenigstens eine feststehende und eine bewegbare Ventilscheibe mit Durchtrittsöffnungen für die Medien vorgesehen ist,und einer nachgeschalteten Mischeinrichtung, dadurch gekennzeichnet, daß die bewegbare Ventilscheibe (12) an der von der feststehenden Ventilscheibe (11) abgekehrten Seite ein Sondergehäuse (13) trägt, in dem die Mischeinrichtung angeordnet ist.

2. Mischbatterie nach Anspruch 1 zur Mischung von Kalt- und Warmwasser, dadurch gekennzeichnet, daß das Sondergehäuse (13) formschlüssig mit der bewegbaren Ventilscheibe (12) verbunden ist und zu den Durchtrittsöffnungen (111,112,113) in der Ventilscheibe (12) separate Zulauf- und Abfließkanäle (131,132) aufweist, wobei die Zulaufkanäle (131) in separate Ringkanäle (133) münden, die jeweils mit einem Kaltwasser- und einem Warmwassereinlaßspalt (62,61) eines im Sondergehäuse (13) etwa parallel zur Mittelachse (5) angeordneten, thermostatgeregelten Mischventils (6) verbunden sind.

3. Mischbatterie nach den Ansprüchen 1 oder 2, dadurch gekennzeichnet, daß das Sondergehäuse (13) eine von der Kopfseite zugängliche Bohrung (134) aufweist, in der das kartuschenartig ausgebildete, thermostatgeregelte Mischventil (6) einsetzbar ist.

4. Mischbatterie nach Anspruch 3, dadurch gekennzeichnet, daß die Bohrung (134) von der Kopfseite aus stufenweise verengt ausgebildet ist und das kartuschenartige Mischventil (6) in einer entsprechend gestuft ausgebildeten Hülse (63) angeordnet ist, wobei im Bereich der Ringkanäle (133) Schlitze (631) ausgebildet sind, denen jeweils ein Siebring (7) vorgelagert ist.

5. Mischbatterie nach Anspruch 4, dadurch gekennzeichnet, daß die Hülse (63) mit einem Kopfstück (64) verschlossen ist und in dem Kopfstück (64) koaxial ein Doppelsitzventilschieber (65) zur Bestimmung der Größe der Einlaßspalte (61,62) für das kalte und warme Wasser mit einem Hohlzapfen (651) in einer Bohrung verschiebbar gelagert ist, wobei ein Dehnstoffelement (66) in dem Hohlzapfen (651) gehalten und mit einem Stößel (661) durch das Kopfstück (64) hindurchgeführt und von einer Feder (67) in eine Anschlaglage gestrammt ist.

6. Mischbatterie nach Anspruch 5, dadurch gekennzeichnet, daß die Feder (67) in einer zur Außenseite offenen Einsenkung (641) im Kopfstück (64) angeordnet ist und der Hohlzapfen (651) auf einer Buchse zur Führung des vom Dehnstoff austreibbaren Stößels (661) gehalten und von einer im Endbereich der Einsenkung (641) vorgesehenen Paßmutter (662) geführt ist, wobei die Paßmutter (662) außerdem mit einer Ringschulter ein Widerlager für die Feder (67) bildet.

7. Mischbatterie nach wenigstens einem der Ansprüche 1 bis 6, dadurch gekennzeichnet, daß die Mischbatterie (1) als eine Baueinheit mit Befestigungsschrauben (68) an einer Armatur (2) mit Zu- und Ablaufkanälen befestigbar ist.

8. Mischbatterie nach wenigstens einem der Ansprüche 1 bis 7, dadurch gekennzeichnet, daß auf dem Kopf der Mischbatterie (1) eine Vorwähleinrichtung (3) für die Mischwassertemperatur und seitlich an der Mischbatterie (1) eine Stellhebeleinrichtung (4) für ein radiales Verschieben der Ventilscheibe (12) mit dem Sondergehäuse (13) zur Einstellung der Gesamtdurchflußmenge vorgesehen ist.

9. Mischbatterie nach Anspruch 8, dadurch gekennzeichnet, daß die Ventilscheiben (11,12) mit dem Sondergehäuse (13) von einem Mantel (14) mit einer Parallelführung (141) umfaßt sind und im Bereich eines Fensters (40) ein Festlager (42) vorgesehen ist, an dem der Stellhebel (41) einerseits verschwenkbar gehaltert ist und andererseits an einem am Sondergehäuse (13) befestigten Augenlager (43) angelenkt ist, so daß durch ein Verschwenken um die Schwenkachse das Sondergehäuse (13) mit der Ventilscheibe (12) radial verschoben wird, und daß der Mantel (14) an der Stirnseite mit einer Kopfscheibe (15) versehen ist, an der einerseits das Sondergehäuse (13) geführt ist und andererseits die Befestigungsschrauben (68) anliegen und die Vorwähleinrichtung (3) gehaltert ist.

10. Mischbatterie nach Anspruch 8, dadurch gekennzeichnet, daß die Kopfscheibe (15) eine zentrale Bohrung aufweist, in die mit Hilfe eines Ringwulstes (161) und einer Ringnut (151) ein Innenring (16) für die Halterung der Baueinheit des Mischventils (6) bajonettartig einsetzbar ist und am Innenring (16) sowie an der Kopfscheibe (15) eine Bodenscheibe (30) der Vorwähleinrichtung (3) anlagerbar und mit Hilfe von in den Innenring (16) einschraubbaren Ankerschrauben (31) der Innenring (16), die Kopfscheibe (15) und die Bodenscheibe (30) kraftschlüssig miteinander verbindbar sind.

11. Mischbatterie nach wenigstens einem der Ansprüche 1 bis 10, dadurch gekennzeichnet, daß die Vorwähleinrichtung (3) von einer Griffhülse (32) mit an dem Außenmantel angeformten Griffflächen (321) und ein an der Innenwandung angebrachtes Bewegungsgewinde (322) umgeben ist, wobei die Griffhülse (32) an den Stirnseiten von den mit Hilfe der Ankerschrauben (31) gehalterten Bodenscheibe (30) und Haubenscheibe (33) geführt ist, und daß in der Griffhülse (32) auf den Ankerschrauben (31) drehfest aber axial verschiebbar eine Schraube (34) angeordnet ist, die mit dem Bewegungsgewinde (322) in Eingriff steht, so daß die Drehung der Griffhülse (32) eine axiale Stellgröße für das Mischventil (6) erzeugt.

12. Mischbatterie nach Anspruch 11, dadurch gekennzeichnet, daß eine Druckplatte (35) in einer die Bodenscheibe (30) und den Innenring (16) durchgreifenden Bohrung verschiebbar gelagert ist, die so bemessen ist, daß der Stößel (661) in allen möglichen Stellungen der Ventilscheibe (12) eine gleichbleibende Anlage erhält, und der größtmögliche Abstand zur Schraube (34) von einem an der Druckplatte (35) befestigten, in der Schraube (34) begrenzt verschiebbaren Bolzen (351) bestimmt ist, wobei zur Sicherung gegen eine Überlastung des Dehnstoffelements (66) eine entsprechend bemessene Druckfeder (352) zwischen der Schraube (34) und der Druckplatte (35) angeordnet ist.

13. Mischbatterie nach den Ansprüchen 11 und 12, dadurch gekennzeichnet, daß das Bewegungsgewinde (322) an der Innenwandung einer Hülse aus gebildet ist, die am Außenmantel eine parallel zur Mittelachse (5) verlaufende Riefenverzahnung (323) aufweist, auf die die Griffhülse (32) zur Justierung in der erforderlichen Drehstellung,bezogen auf die Temperatur des erzeugten Mischwassers und einer auf der Vorwähleinrichtung angeordneten Temperaturskala,aufschiebbar und in der Stecklage mit Hilfe, z.B. einer Arretierschraube, einer Schnappeinrichtung oder dergleichen gesichert ist.

14. Mischbatterie nach wenigstens einem der Ansprüche 1 bis 7, dadurch gekennzeichnet, daß die Vorwähleinrichtung (3) verschwenkbar auf der Mischbatterie (1) angeordnet ist und durch ein Verschwenken die Gesamtdurchflußmenge sowie durch ein Drehen der Griffhülse (32) die Temperatur des ausfließenden Mischwassers bestimmbar ist.

15. Mischbatterie nach Anspruch 14, dadurch gekennzeichnet, daß die Vorwähleinrichtung (3) an einem Endbereich eines Hebels (8) außen angeordnet und ein besonderes Mittel für die Übertragung der Stellgröße für das Mischventil (6) vorgesehen ist und daß das Kopfstück (64) des Mischventils (6) mit einem Zapfen (642) radial verschiebbar durch die Kopfscheibe (15) hindurchgreift, wobei das Drehlager des Hebels (8) an dem vorstehenden Zapfen (642) ausgebildet ist und der andere Arm des Hebels (8) an der Kopfscheibe (15) gehalten ist, so daß bei einer Verschwenkung um die Schwenkachse (81) das Kopfstück (64) mit dem Sondergehäuse (13) radial verschoben wird.

16. Mischbatterie nach Anspruch 15, dadurch gekennzeichnet, daß der Hebel (8) im wesentlichen rohrförmig ausgebildet ist und mit einer Gabel (80) den Zapfen (642) an zwei Seiten umfaßt, wobei die Stirnseite der Gabel (80) als Wange (801) ausgebildet und jeweils einen Schlitz (802) aufweist, der jeweils eine feststehende Knagge (171) umgreift, daß koaxial in dem Hebel (8) ein Gestänge (82) mit einer Überlastsicherung (83) angeordnet ist, welches an einem Ende einen Kugelkopf (821) aufweist, der von der Einsenkung (641) im Zapfen (642) im Bereich der Schwenkachse (81) aufgenommen ist und an den der Stößel (661) anliegt, und welches am anderen Ende in einer Mulde (342) der Schraube (34) gehalten ist.

17. Mischbatterie nach Anspruch 16, dadurch gekennzeichnet, daß der rohrförmige Endbereich des Hebels (8) Längsschlitze (84) in der Wandung aufweist, durch die radiale Fortsätze (341) der Schraube (34) hindurchgreifen und eine drehfeste aber axial verschiebbare Verbindung mit dem Hebel (8) sowie einen Eingriff mit dem Bewegungsgewinde (322) bilden, wobei im Grund der Längsschlitze (84) eine Bodenscheibe (30) eingelagert und der gegenüberliegende Endbereich - nach dem Zusammenfügen von Bodenscheibe (30), Schraube (34) und der Hülse des Bewegungsgewindes (322) auf dem Hebel (8) - mit einer Umbördelung (85) versehen ist, mit der die Hülse des Bewegungsgewindes (322) drehbar aber axial festliegend auf dem Hebel (8) gehalten ist.

18. Mischbatterie nach Anspruch 17, dadurch gekennzeichnet, daß oberhalb der Kopfscheibe (15) eine sphärisch ausgebildete Haube (135) vorgesehen ist, deren Kugelmittelpunkt etwa auf der Schwenkachse (81) angeordnet ist, und die Griffhülse (32) mit einem kreisförmigen, bis in die Nähe der Haube (135) vorkragenden Rand (324) versehen ist, auf dem eine Temperaturskala (325) befestigt ist, wobei die Griffhülse (32) mit der Riefenverzahnung (323) auf der Hülse des Bewegungsgewindes (322) in der erforderlichen Drehstellung aufsteckbar ist.

19. Mischbatterie nach wenigstens einem der Ansprüche 14 bis 18, dadurch gekennzeichnet, daß der mit einer Öffnung zur Aus- und Einführung des Mischventils (6) versehenen Kopfscheibe (15) eine Montageplatte (86) mit Schrauben (861) befestigbar ist, daß die Montageplatte (86) einen Durchbruch (862) hat, in dem der Zapfen 642 des Kopfstücks (64) radial verschiebbar geführt ist, und daß der Hebel (8) mit auf der Schwenkachse (81) in die Gabel (80) einsetzbaren Stiftschrauben (803) mit dem Zapfen 642 verschwenkbar verbunden ist, wobei die Knaggen (171) von Ansätzen der Montageplatte (86) im Bereich des Durchbruchs (862) gebildet sind und an den beiden Außenseiten der Gabel (80) auf den Stiftschrauben (803) Gleitschuhe (804) drehbar gehaltert sind, so daß, wenn das Mischventil (6) aus der Mischbatterie (1) herausgenommen wird, außer der Radialverschiebung keine weitere Relativbewegungsmöglichkeit zur Montageplatte (86) entsteht.

**20.** Mischbatterie nach Anspruch 19, dadurch gekennzeichnet, daß auf der Stirnfläche des Kopfstücks (64) eine Gleitscheibe 87 angeordnet ist, welche an der Unterseite der Montageplatte (86) anliegt und deren Dicke nicht kleiner ist als die der Kopfscheibe (15)

**21.** Mischbatterie nach Anspruch 15, dadurch gekennzeichnet, daß zur Übertragung der Stellgröße für das Mischventil (6) eine hydraulische Einrichtung vorgesehen ist, wobei die Schraube (34) mit einem Kolben verbunden ist, mit dem die Hydraulikflüssigkeit durch eine flexible Leitung drückbar ist und der Stößel (661) mit einem entsprechenden Kolben für die Rückwandlung der Stellgröße verbunden ist.

**22.** Mischbatterie nach Anspruch 21, dadurch gekennzeichnet, daß als Überlastsicherung ein vorgespanntes Gasvolumen in der Hydraulikeinrichtung vorgesehen ist.

**23.** Mischbatterie nach Anspruch 21, dadurch gekennzeichnet, daß als Hydraulikflüssigkeit Kaltwasser eingesetzt und eine Nachfülleinrichtung vorgesehen ist, die von dem Kaltwasserzufluß der Mischbatterie (1) gespeist wird.

## Claims

**1.** Mixing tap with upstream, adjacent valve discs for synchronous controlled admission and shutting off of the inflowing media, at least one fixed and one movable valve disc with through-openings for the media being provided, and with a downstream mixing device, characterized in that, on the side remote from the fixed valve disc (11), the movable valve disc (12) carries a separate housing (13) in which the mixing device is arranged.

**2.** A mixing tap according to claim 1 for mixing cold and hot water, characterized in that the separate housing (13) is integrally joined to the movable valve disc (12) and has separate inlet and outlet channels (131, 132) to the through-openings (111, 112, 113) in the valve disc (12), the feed channels (131) opening out into separate annular channels (133), which are joined respectively to a cold water and a hot water inlet slot (62, 61) of a thermostat-controlled mixing valve (6) arranged in the separate housing (13) approximately parallel to the centre line (5).

**3.** A mixing tap according to claims 1 or 2, characterized in that the separate housing (13) has a bore (134) that is accessible from the top end, into which the thermostat-controlled mixing valve (6) of cartridge-like construction can be inserted.

**4.** A mixing tap according to claim 3, characterized in that the bore (134) is narrowed in steps from the top end and the cartridge-like mixing valve (6) is arranged in a sleeve (63) of correspondingly stepped construction, slots (631) being formed in the region of the annular channels (133), upstream of each of which slots there is arranged a filter ring (7).

**5.** A mixing tap according to claim 4, characterized in that the sleeve (63) is closed off with a top piece (64) and coaxially in the top piece (64) a double-seated valve slider (65) for determining the size of the inlet slots (61, 62) for the cold and hot water is displaceably mounted with a hollow pin (651) in a bore, a member made of expanding material (66) being mounted in the hollow pin (651) and being guided with a push rod (661) through the top piece (64) and being urged by a spring (67) into an end position.

**6.** A mixing tap according to claim 5, characterized in that the spring (67) is arranged in a recess (641), open towards the outside, in the top piece (64), and the hollow pin (651) is mounted on a bushing for guiding the push rod (661) that is arranged to be pushed out by the expanding material, and is guided by an adjusting nut (662) provided in the end region of the recess (641), the adjusting nut (662) additionally forming with an annular shoulder an abutment for the spring (67).

**7.** A mixing tap according to at least one of claims 1 to 6, characterized in that the mixing tap (1) can be fixed as a structural unit by means of fixing screws (68) to a fitting (2) with inlet and outlet channels.

**8.** A mixing tap according to at least one of claims 1 to 7, characterized in that on the top of the mixing tap (1) there is provided a means (3) for preselecting the temperature of the mixed water, and laterally of the mixing tap (1) there is provided an adjusting lever arrangement (4) for a radial displacement of the valve disc (12) with the separate housing (13) for adjusting the total amount of water flowing through.

9. A mixing tap according to claim 8, characterized in that the valve discs (11, 12), together with the separate housing (13), are surrounded by a jacket (14) with a parallel guide means (141), and in the region of a window (40) there is provided a fixed bearing (42), on which the adjusting lever (41) at one side is pivotally mounted and on the other side is hinged to an eye-type bearing (43) fixed to the separate housing (13), so that the separate housing (13) is displaced radially with the valve disc (12) by a swivelling movement about the pivot axis, and the jacket (14) is provided at its end face with a top disc (15), on one side of which the separate housing (13) is guided and on the other side of which the fixing screws (68) bear and the preselector means (3) is mounted.

10. A mixing tap according to claim 8, characterized in that the top disc (15) has a central bore into which, with the help of an annular bead (161) and an annular groove (151), an internal ring (16) can be inserted for the bayonet-type mounting of the mixing valve unit (6), and the inner ring (16) and the top disc (15) are arranged to be engaged by a base disc (30) of the preselector means (3), and the inner ring (16), the top disc (15) and the bottom disc (30) are arranged to be friction-locked with one another with the help of anchoring screws (31) that can be screwed into the inner ring (16).

11. A mixing tap according to at least one of claims 1 to 10, characterized in that the preselector means (3) is surrounded by a in the form of a grip-type sleeve (32) with gripping surfaces (321) moulded on its outer surface, and a movement thread (322) arranged on its inner wall, the grip-type sleeve (32) being guided on the end faces of the base disc (30) and cap disc (33) that are mounted with the help of the anchoring screws (31), and in that a screw (34) is arranged in the grip-type sleeve (32) so that is cannot be rotated but so that is it axially displaceable on the anchoring screws (31), which screw (34) engages with the movement thread (322) so that the rotation of the grip-type sleeve (32) produces an axial adjusting variable for the mixing valve (6).

12. A mixing tap according to claim 11, characterized in that a pressure plate (35) is displaceably mounted in a bore passing through the base disc (30) and the inner ring (16), the pressure plate being of such dimensions that the push rod (661) maintains a constant engagement in all possible positions of the valve disc (12), and the largest possible spacing from the screw (34) is determined by a bolt (351) secured to the pressure plate (35) with limited displacement in the screw (34), wherein, to safeguard the element (66) of expanding material from being overstressed, a suitably rated compression spring (352) is arranged between the screw (34) and the pressure plate (35).

13. A mixing tap according to claims 11 and 12, characterized in that the movement thread (322) is formed on the inner wall of a sleeve which on its outer surface has a fluted configuration (323) onto which the grip-type sleeve (32) for the adjusting can be pushed in the required rotated position, specific to the temperature of the mixed water produced and of a temperature scale arranged on the preselector means, and is secured in the pushed-on position with the help, for example, of a locking screw, a snap-fit device or similar means.

14. A mixing tap according to at least one of claims 1 to 7, characterized in that the preselector means (3) is arranged on the mixing tap (1) so as to swivel, and the total amount of water flowing through can be determined by a swivelling action and the temperature of the emerging mixed water can be determined by a rotation of the grip-type sleeve (32).

15. A mixing tap according to claim 14, characterized in that the preselector means (3) is arranged externally at an end region of a lever (8) and a special means is provided for transfer of the adjusting variable for the mixing valve (6), and the top piece (64) of the mixing valve (6) passes through the top disc (15) by means of a pin (642) so as to be radially displaceable, the rotary bearing of the lever (8) being formed at the projecting pin (642) and the other arm of the lever (8) being secured to the top disc (15) so that on being swivelled about the swivel axis (81) the top piece (64) is displaced radially with the separate housing (13).

16. A mixing tap according to claim 15, characterized in that the lever (8) is of essentially tubular construction, and with a fork-like member (80) encloses the pin (642) on two sides, the end face of the fork-like member (80) being in the form of a cheek (801) and having a respective slot (802) which engages around a respective fixed lug (171), in that coaxially in the lever (8) there is arranged a rod mechanism (82) with an overload protection means (83), the rod mechanism at one end having a spherical head (821), which is received by the recess (641) in the pin (642) in the region of the swivel axis (81) and against which the push-rod (661) bears, and at its other end being mounted in a depression (342) in the screw (34).

17. A mixing tap according to claim 16, characterized in that the tubular end region of the lever (8) has longitudinal slots (84) in the wall, through which radial extensions (341) of the screw (34) engage and form a non-rotatable but axially displaceable connection with the lever (8) and an engagement with the movement thread (322), wherein, at the bottom of the longitudinal slots (84), a base disc (30) is mounted and the opposite end region - after the bottom disc (30), screw (34) and the sleeve of the movement thread (322) have been assembled on the lever (8) - is provided with a flange (85), with which the sleeve of the movement thread (322) is mounted on the lever (8) so that it rotates but so that is axially fixed.

18. A mixing tap according to claim 17, characterized in that above the top disc (15) there is provided a spherical cap (135), the middle point of the sphere being arranged approximately on the swivel axis (81), and the grip-type sleeve (32) is provided with a circular edge (324), to which a temperature scale (325) is secured, projecting close up to the cap (135), the grip-type sleeve (32) being arranged to be pushed on in the required rotated position to engage with the fluted configuration (323) on the sleeve of the movement thread (322).

19. A mixing tap according to at least one of claims 14 to 18, characterized in that a mounting plate (86) is arranged to be fixed with screws (861) to the top disc (15) that is provided with an opening for the withdrawal and insertion of the mixing valve (6), the mounting plate (86) has an aperture (862) in which the pin (641) of the top piece (64) is guided so as to be radially displaceable, and the lever (8) is connected, so as to swivel, to the pin (641) by means of locking screws (803) that can be inserted on the swivel axis (81) into the fork-like member (80), the lugs (171) being formed by projections of the mounting plate (86) in the region of the aperture (862) and guide shoes (804) being rotatably mounted on the locking screws (803) at the two outer sides of the fork-like member (80) so that, when the mixing valve (6) is removed from the mixing tap (1), apart from the radial displacement, no further possible relative movement with respect to the mounting plate (86) takes place.

20. A mixing tap according to claim 19, characterized in that on the end face of the top piece (64) there is arranged a sliding disc (86) which bears against the underside of the mounting plate (86) and the thickness of which is not less than that of the top piece (15).

21. A mixing tap according to claim 15, characterized in that, in order to transfer the adjusting variable for the mixing valve (6), an hydraulic arrangement is provided, the screw (34) being connected to a piston with which the hydraulic fluid can be pressed through a flexible line and the push rod (661) being connected to a corresponding piston for the reconversion of the adjusting variable.

22. A mixing tap according to claim 21, characterized in that a precompressed gas volume is provided in the hydraulic arrangement as the over-load protection means.

23. A mixing tap according to claim 21, characterized in that cold water is used as the hydraulic fluid and a replenishing arrangement is provided which is fed by the cold water flow to the mixing tap (1).

**Revendications**

1. Batterie de mélangeur comportant des disques formant obturateurs, appliqués l'un contre l'autre, en amont pour le dosage et la coupure synchrone de flux de liquide, avec au moins un disque obturateur fixe et un disque mobile avec des orifices de passage pour les fluides, et un mélangeur en aval, batterie, caractérisée en ce que le disque obturateur (12), mobile porte sur sa face opposée au disque formant obturateur (11), fixe, un boîtier (13) particulier dans lequel est prévu le dispositif mélangeur.

2. Batterie de mélangeur selon la revendication 1 pour mélanger de l'eau froide et de l'eau chaude, caractérisée en ce que le boîtier particulier (13) est relié au disque formant obturateur (12), mobile, par une liaison par la forme et comporte pour les orifices de passage (111, 112, 113) du disque formant obturateur (12), des canaux d'arrivée de sortie (131, 132) distincts, les canaux d'arrivée (131) débouchant dans des canaux annulaires (133) distincts qui sont chaque fois reliés à un intervalle d'entrée d'eau froide et d'eau chaude (62, 61) d'un robinet mélangeur (6), thermostatique, prévu dans le boîtier particulier (13), sensiblement parallèlement à l'axe médian (5).

3. Batterie de mélangeur selon la revendication 1 ou 2, caractérisée en ce que le boîtier particulier (13) comporte un perçage (134) accessible par la face avant et qui reçoit le mélangeur (6) thermostatique en forme de cartouche.

4. Batterie de mélangeur selon la revendication 3, caractérisée en ce que le perçage (134) va en diminuant par gradin à partir de la face avant, et le mélangeur (6) en forme de cartouche est placé dans un manchon (63) à gradin correspondant, et au niveau des canaux annulaires (133) se trouvent des fentes (631) précédées chaque fois d'une bague formant tamis (7).

5. Batterie de mélangeur selon la revendication 4, caractérisée en ce que le manchon (63) est fermé par une pièce frontale (64) et dans cette pièce (64), coaxialement, se trouve un distributeur (65) à double siège, pour définir la grandeur de la fente d'entrée (61, 62) pour l'eau chaude et pour l'eau froide, avec une pièce creuse (651) logée coulissante dans un alésage, un élément dilatable (66) étant placé dans la pièce creuse (651) en traversant la pièce frontale (64) avec un poussoir (661) en étant maintenu par un ressort (67) précontraint dans une position de butée.

6. Batterie de mélangeur selon la revendication 5, caractérisée en ce que le ressort (67) est placé dans la pièce frontale (64) dans une cavité (641) ouverte vers l'extérieur et la pièce creuse (651) est maintenue sur un manchon pour guider le poussoir (661) expulsé par la matière dilatable, en étant guidé par un écrou chapeau (662) prévu dans la zone d'extrémité de la cavité (641), cet écrou (662) forme en outre avec un épaulement annulaire, un appui pour le ressort (67).

7. Batterie de mélangeur selon au moins l'une des revendications 1 à 6, caractérisée en ce que la batterie (1) se fixe sous la forme d'un ensemble constructif avec des vis de fixation (68) sur un robinet (2) avec les canaux d'arrivée et de sortie.

8. Batterie de mélangeur selon au moins l'une des revendications 1 à 7, caractérisée en ce que sur le devant de la batterie de mélangeur (1), il est prévu un dispositif de présélection (3) de la température de l'eau mélangée et latéralement sur la batterie de mélangeur (1), il est prévu un dispositif à levier de réglage (41) pour une translation radiale du disque formant obturateur (12) avec le boîtier particulier (13) pour régler le débit total.

9. Batterie de mélangeur selon la revendication 8, caractérisée en ce que les disques formant obturateurs (11, 12) et le boîtier particulier (13) sont entourés d'une enveloppe (14) avec un guidage parallèle (141) et au niveau d'une fenêtre (40), il est prévu un palier fixe (42) qui d'une part, maintient d'une manière pivotante le levier de réglage (41) et qui est d'autre part, est articulé sur un palier en forme d'oeillet (43), fixé sur le boîtier particulier (13), de manière qu'un mouvement de pivotement autour de l'axe de pivotement, déplace radialement le boîtier particulier (13), le disque formant obturateur (12), et l'enveloppe (14) comporte sur sa face frontale un disque avant (15) qui d'une part, guide le boîtier particulier (13) et d'autre part, sert d'appui aux vis de fixation (68) et au dispositif de présélection (3).

10. Batterie de mélangeur selon la revendication 8, caractérisée en ce que le disque avant (15) comporte un perçage central qui reçoit par l'intermédiaire d'un bourrelet annulaire (161) et d'une rainure annulaire (151), un anneau intérieur (16) pour fixer l'ensemble formé par le robinet mélangeur (6) mis en place à la manière d'une baïonnette et sur la bague intérieure (16) ainsi que sur le disque avant (15) s'applique un disque de fond (30) du dispositif de présélection (3) et à l'aide de vis d'ancrage (31) visées dans la bague intérieure (16), on relie cette bague (16), le disque avant (15) et le disque de fond (30) par une liaison par la force.

11. Batterie de mélangeur selon au moins l'une des revendications 1 à 10, caractérisée en ce que le dispositif de présélection (3) est entouré par un manchon formant poignée (32) avec des surfaces de préhension (321) formées sur l'enveloppe extérieure et en étant entouré d'un filetage d'entraînement (322) prévu sur la paroi intérieure, le manchon de préhension (32) étant guidé contre la face avant par le disque de fond (30), et le disque chapeau (33) maintenu à l'aide des vis d'ancrage (31) et en ce qu'une vis (34) est prévue solidaire en rotation mais coulissante axialement dans le manchon de préhension (32) sur la vis d'ancrage (31), cette vis étant en prise avec le filetage de mouvement (322) pour que la rotation du manchon de préhension (32) crée une grandeur de réglage axiale pour le robinet mélangeur (6).

12. Batterie de mélangeur selon la revendication 11, caractérisée en ce qu'une plaque de pression (35) est placée coulissante dans un perçage traversant le disque de fond (30) et la bague intérieure (16), ce perçage étant dimensionné pour que le poussoir (661) soit en appui constant quelque soit la position du disque formant obturateur (12) et que la distance la plus grande possible par rapport à la vis (34) soit fixée par un goujon (351) coulissant de manière limitée dans la vis (34) en étant fixé sur la plaque de pression (35), et la protection contre toute surcharge de l'élément en un matériau dilatable (66) étant assurée par un ressort de compression (352) dimensionné de manière appropriée, ce ressort étant placé entre la vis (34) et la plaque de compression (35).

13. Batterie de mélangeur selon les revendication 11 et 12, caractérisée en ce que le filetage d'entraînement (322) est réalisé sur la paroi intérieure d'un manchon dont l'enveloppe extérieure comporte une denture moletée (323) parallèle à l'axe (5) et sur laquelle s'emmanche le manchon de préhension (32) pour régler dans la position de rotation nécessaire apportée à la température de l'eau de mélange et une échelle de température associée au dispositif de présélection, et qui est bloquée dans cette position engagée à l'aide par exemple d'une vis de blocage, un dispositif d'encliptage ou moyen analogue.

14. Batterie de mélangeur selon au moins l'une des revendications 1 à 7, caractérisée en ce que le dispositif de présélection (3) est monté pivotant sur la batterie de mélangeur (1) et par basculement, on détermine le débit total, et par rotation de la poignée de préhension (32), on détermine la température de l'eau de mélange qui s'écoule.

15. Batterie de mélangeur selon la revendication 14, caractérisée en ce que le dispositif de présélection (3) est prévu extérieurement à l'extrémité d'un levier (8) et un moyen particulier est prévu pour transmettre la grandeur de réglage destinée à un robinet mélangeur (6) et en ce que la pièce avant (64) du robinet mélangeur (6) traverse le disque avant (15) avec un téton (642) coulissant radialement à travers ce disque, le palier de rotation du levier (8) étant réalisé sur le téton en saillie (642) et l'autre bras du levier (8) est maintenu sur le disque avant (15) de manière que pour un basculement autour de l'axe (81), la pièce avant (64) coulisse radialement avec le boîtier particulier (13).

16. Batterie de mélangeur selon la revendication 15, caractérisée en ce que le levier (8) est pratiquement tubulaire et entoure sur deux côtés le téton (642) avec une fourche (80), la face frontale de la fourche (80) étant en forme de joue (801) et comporte chaque fois une fente (802) qui entoure respectivement un taquet fixant (171) et, coaxialement au levier (8) il est prévu une tringlerie (82) avec une sécurité de surcharge (83) dont une extrémité est munie d'une tête sphérique (821) reçue par la cavité (641) du téton (642) au niveau de l'axe de pivotement (81) et contre lequel s'appuie le poussoir (661), l'autre extrémité étant maintenue dans la goulotte (342) de la vis (34).

17. Batterie de mélangeur selon la revendication 16, caractérisée en ce que l'extrémité tubulaire du levier (8) comporte à la paroi les fentes longitudinales (84) traversées par des prolongements radiaux (341) de la vis (34) et forme une liaison solidaire en rotation mais coulissante axialement avec le levier (8) ainsi qu'une prise pour le filetage de mouvement (322) et au fond de la fente longitudinale (84) est logé un disque de fond (30) et la zone d'extrémité opposée (après réunion du disque de fond (30) de la vis (34) et du manchon du filetage de mouvement (322) sur le levier (8), comporte un moletage (85) par lequel le manchon du filetage de mouvement (322) est maintenu en rotation mais bloqué axialement sur le levier (8).

18. Batterie de mélangeur selon la revendication 17, caractérisée en ce qu'au-dessus du disque avant (15) est prévue une coiffe (135) sphérique dont le centre de la sphère se trouve sensiblement sur l'axe de pivotement (81) et le manchon de préhension (32) est muni d'un bord (324) circulaire en saillie jusqu'à proximité de la coiffe (135), bord portant une échelle de température (325) et le manchon de préhension (32) peut s'emmancher avec la denture moletée (323) sur le manchon du filetage de mouvement (322) dans la position de rotation nécessaire.

19. Batterie de mélangeur selon au moins l'une des revendications 14 à 18, caractérisée en ce que le disque avant (15) muni d'une ouverture pour l'introduction et l'extraction du robinet mélangeur (6), se fixe sur une plaque de montage (86) avec des vis (861) et la plaque de montage (86) comporte un passage (862) qui reçoit coulissant radialement, le téton (641) de la pièce avant (64) et en ce que le levier (8) est relié de manière pivotante au téton (641) par des vis (803) susceptibles d'être logées dans la fourche (80) sur l'axe de pivotement (81), et les taquets (171) sont formés par des prolongements de la plaque de montage (86) au niveau du passage (862) et sur les côtés extérieurs de la fourche (80), sur les vis (803), se trouvent des patins (804) tournants, de manière que lorsque le robinet mélangeur (6) est extrait de la batterie (1), il n'y ait pas d'autres possibilités de mouvement relatif par rapport à la plaque de montage (86) qu'une translation radiale.

20. Batterie de mélangeur selon la revendication 19, caractérisée par un disque de glissement (86) sur la face frontale de la pièce avant (64), disque qui s'applique contre la face inférieure de la plaque de montage (86) et dont l'épaisseur n'est pas inférieure à celle du disque avant (15).

21. Batterie de mélangeur selon la revendication 15, caractérisée par un dispositif hydraulique pour transmettre la grandeur de réglage au robinet mélangeur (6) et la vis (34) est reliée à un piston qui peut pousser le liquide hydraulique à travers une conduite souple et le poussoir (661) est relié à un piston correspondant pour convertir en retour la grandeur de réglage.

22. Batterie de mélangeur selon la revendication 21, caractérisée en ce que comme sécurité de surcharge, le dispositif hydraulique comporte un volume de gaz précontraint.

23. Batterie de mélangeur selon la revendication 21, caractérisée en ce que le liquide hydraulique est de l'eau froide et un dispositif de remplissage complémentaire est prévu qui est alimenté par l'eau froide de la batterie de mélangeur (1).

Fig.1

Fig. 2

Fig. 3

3

1

2

15

14

141

141

68

68

12

13

11

IV

IV

Fig. 4

111

112

14

2

68

68

113

11

Fig. 6

Fig. 5

Fig. 7

Fig. 8

Fig.9

Fig. 10

Fig. 11

Fig. 12

20